# EUROPÄISCHE PATENTSCHRIFT

(11) **EP 2 219 989 B1**
(45) Veröffentlichungstag und Bekanntmachung des Hinweises auf die Patenterteilung: **17.04.2013**
(21) Anmeldenummer: 08854673.4
(22) Anmeldetag: 28.11.2008
(51) Int. Cl.: B66F 9/075, B60K 1/04

(54) **ELEKTROFAHRZEUG, INSBESONDERE FLURFÖRDERZEUG MIT BATTERIESICHERUNG**
ELECTRIC VEHICLE, ESPECIALLY INDUSTRIAL TRUCK, COMPRISING A BATTERY SECURING MECHANISM
VÉHICULE ÉLECTRIQUE, EN PARTICULIER CHARIOT DE MANUTANTION DOTÉ D'UN SYSTÈME DE MAINTIEN

(30) Priorität: 30.11.2007 DE 102007057801
(43) Veröffentlichungstag der Anmeldung: 25.08.2010
(73) Patentinhaber: Jungheinrich Aktiengesellschaft, 22047 Hamburg (DE)
(72) Erfinder: BERGMEIER, Stefan, 85465 Langenpreising (DE); SCHÖTTKE, Carsten, 85368 Moosburg (DE)
(74) Vertreter: Tiesmeyer, Johannes
(86) Internationale Anmeldenummer: PCT/EP2008/010127
(87) Internationale Veröffentlichungsnummer: WO 2009/068304

(56) Entgegenhaltungen:
- EP-A- 1 205 424
- EP-A- 1 595 841
- DE-A1- 19 622 694
- DE-A1-102004 047 339
- DE-A1-102006 016 801
- DE-C1- 19 546 556

## Beschreibung

Die vorliegende Erfindung betrifft ein Elektrofahrzeug, insbesondere Flurförderzeug mit einer Sicherungseinrichtung für einen im Fahrzeug aufgenommenen Batterieblock, um den Batterieblock im Betrieb des Fahrzeugs gegen Verschiebungen innerhalb eines Batterieaufnahmefachs zu sichern.

Bekannte Batteriesicherungen, die bei Flurförderzeugen zum Einsatz kommen, weisen in der Regel einen auf einer Seite des Fahrzeugs angeordneten schwenkbaren Hebel auf, der von einer Öffnungsstellung in eine Sicherungsstellung verschwenkt werden kann, um das Einführen bzw. Herausnehmen eines Batterieblocks in bzw. aus dem Batterieaufnahmefach zu ermöglichen und um den Batterieblock gegen seitliche Bewegung während des Betriebs zu sichern. Derartige Hebelkonstruktionen benötigen innerhalb des Fahrzeuggehäuses relativ viel Platz, um die erforderliche Stabilität aufzuweisen, die für die Sicherung des sehr schweren Batterieblocks erforderlich ist.

Ein Elektrofahrzeug gemäß dem Oberbegriff des Anspruchs 1 ist aus der EP 1 595 841 bekannt.

Aufgabe der Erfindung ist es, eine Batteriesicherung bereitzustellen, die weniger Bauraum benötigt.

Zur Lösung dieser Aufgabe schlägt die Erfindung ein Elektrofahrzeug vor, insbesondere ein Flurförderzeug mit wenigstens einem Sicherungsbügel für einen im Fahrzeug aufgenommenen Batterieblock, wobei der Sicherungsbügel einen in ein erstes Rahmenteil des Fahrzeugs einführbaren Eingriffsabschnitt, ein in ein zweites Rahmenteil einhängbares Befestigungselement und einen sich dazwischen erstreckenden Halteabschnitt umfasst, wobei der Sicherungsbügel in einer im Fahrzeug eingesetzten Sicherungsstellung mit einem Abstützbereich wenigstens teilweise am Batterieblock anliegt und wobei sich der Abstützbereich des Sicherungsbügels im Bereich des Halteabschnitts oder im Bereich des Übergangs zwischen Halteabschnitt und Eingriffsabschnitt befindet und ein Auflager des Sicherungsbügels am Batterieblock bildet, derart, dass bei in das erste Rahmenteil eingeführtem Eingriffsabschnitt das Befestigungselement unter elastischer Verformung des Halteabschnitts im zweiten Rahmenteil einhängbar ist.

Ein derartiger Sicherungsbügel ist seitlich des Batterieblocks angeordnet und erstreckt sich zwischen einer Außenseite des Batterieblocks und einer Innenseite einer am Fahrzeugrahmen zu befestigenden oder befestigten Abdeckplatte, mit welcher das Batterieaufnahmefach verschlossen werden kann. Der durch den Sicherungsbügel benötigte Bauraum beschränkt sich somit auf den zwischen dem Batterieblock und der Abdeckplatte vorhandenen, in der Regel nicht genutzten Zwischenraum. Eine darüber hinausgehende Bauraumbeanspruchung in das Batteriefach hinein, also in einer Querrichtung zu einer Hauptfahrtrichtung des Fahrzeugs ist somit nicht erforderlich.

Vorzugsweise ist der Sicherungsbügel derart ausgeführt, dass er in der Sicherungsstellung eine im Abstützbereich auf den Batterieblock wirkende Spannkraft ausübt. Durch diese Spannkraft wird der Batterieblock fest im Aufnahmefach gehalten, und gleichzeitig führt diese Spannkraft dazu, dass der Eingriffsabschnitt gegen das erste Rahmenteil und das Befestigungselement gegen das zweite Rahmenteil gedrückt bzw. verspannt werden, so dass gewährleistet ist, dass sich der Sicherungsbügel während des Betriebs des Fahrzeugs weder aus dem ersten Rahmenteil noch dem zweiten Rahmenteil lösen kann.

Um den Sicherungsbügel manuell entfernen zu können, wird vorgeschlagen, dass er entgegen der in der Sicherungsstellung wirkenden Vorspannkraft außer Eingriff mit wenigstens einem der Rahmenteile, vorzugsweise dem zweiten Rahmenteil, bringbar ist. Die hierfür durch eine Bedienperson auf den Sicherungsbügel auszuübende Gegenkraft zur wirkenden Vorspannung wird maßgeblich dadurch bestimmt, welches Hebelarmverhältnis zwischen dem Befestigungselement, dem Halteabschnitt und dem Eingriffsabschnitt vorliegt. Sofern der Abstützbereich, in dem der Sicherungsbügel am Batterieblock anliegt, möglichst weit weg vom Befestigungselement gewählt wird, ergibt sich ein für die manuelle Betätigung guter Hebelarm, durch den mit relativ geringem manuellem Kraftaufwand am Befestigungselement eine große Spannkraft im Abstützbereich des Sicherungsbügels erzeugt und auf den Batterieblock übertragen werden kann.

Besonders vorteilhaft ist es, wenn sich der Sicherungsbügel in der Sicherungsstellung in im Wesentlichen vertikaler Richtung vom ersten, unteren Rahmenteil zum zweiten, oberen Rahmenteil des Fahrzeugs erstreckt, wobei das untere und das obere Rahmenteil eine Öffnung eines Aufnahmefachs für den Batterieblock in Vertikalrichtung begrenzen. Bei einer solchen Anordnung ist es möglich, dass das manuelle Aufbringen einer Kraft zum Einhängen des Sicherungsbügels in der Sicherungsstellung bzw. zum Lösen aus dieser Sicherungsstellung auf einer für eine Bedienperson optimalen Höhe erfolgen kann, nämlich in einem Bereich von etwa 80 - 120 cm über dem Boden. Ferner kann durch die im Wesentlichen vertikale Ausrichtung des Sicherungsbügels ein maximales Hebelarmverhältnis erzielt werden, da die zu sichernden Batterieblöcke in der Regel eine vertikale Höhe aufweisen, die größer ist als ihre horizontale Breite. Allerdings ist es durchaus auch denkbar, dass ein solcher Sicherungsbügel im Wesentlichen horizontal verläuft und somit beispielsweise mit seinem Eingriffsabschnitt in einem ersten, vorderen Rahmenteil des Fahrzeugs einführbar ist und mit seinem Befestigungselement in einem zweiten, hinteren Rahmenteil einhängbar bzw. einrastbar ist.

Vorzugsweise ist der Eingriffsabschnitt als Lasche ausgeführt, die einstückig mit dem Halteabschnitt ausgebildet ist, wobei es besonders bevorzugt ist, dass die Lasche bezogen auf den Halteabschnitt abgewinkelt ist, vorzugsweise in einer Richtung weg vom Batterieblock bezogen auf die Sicherungsstellung. Eine derartige Ausgestaltung führt im Übergang zwischen Eingriffsabschnitt und Halteabschnitt zu einer Biegung, welche mit ihrer konvexen Seite zum Batterieblock hin gerichtet ist in der Sicherungsstellung und welche als Abstützbereich am Batterieblock dient, wenn der Befestigungsabschnitt im zweiten, oberen Rahmenteil eingehängt wird.

Vorzugsweise ist das Befestigungselement verstellbar am Halteabschnitt befestigt, derart, dass der Abstand zwischen einem in das zweite, obere Rahmenteil einhängbaren Abschnitt des Befestigungselements und dem Halteabschnitt veränderbar ist. Eine derartige Verstellbarkeit ermöglicht es, den Sicherungsbügel für unterschiedliche Fahrzeugtypen mit unterschiedlichen Batterieblöcken einzusetzen. Ferner kann durch die Verstellbarkeit des Befestigungselements relativ zum Halteabschnitt die zum Einhängen bzw. Aushängen des Befestigungselements am zweiten Rahmenteil erforderliche manuelle Kraft beeinflusst werden und somit auch die auf den Batterieblock wirkende Spannkraft.

Das Befestigungselement kann an einer Befestigungszunge des Halteabschnitts angeordnet sein, wobei die Befestigungszunge vom Halteabschnitt bezogen auf die Sicherungsstellung in Richtung des Batterieblocks vorsteht.

Besonders bevorzugt ist es, dass die Befestigungszunge oder/und das Befestigungselement ein Langloch aufweisen, durch das eine die Befestigungszunge und das Befestigungselement miteinander verbindende Schraubenanordnung, insbesondere Schrauben-Mutter-Anordnung, hindurchgeht und das derart ausgebildet ist, dass das Befestigungselement bei gelöster Schraubenanordnung entlang der Befestigungszunge verstellbar ist. Die Befestigungszunge kann relativ zum Halteabschnitt geneigt verlaufen, so dass bei einer relativen Verschiebung zwischen dem Befestigungselement und der Befestigungszunge auch eine vertikale Bewegungskomponente enthalten ist, durch die das Befestigungselement auch bezüglich seiner Höhe relativ zum unteren Rahmenteil einstellbar ist.

In Sicherungsstellung ist es bevorzugt, dass sich der einhängbare Abschnitt des Befestigungselements in im Wesentlichen vertikaler Richtung erstreckt. Dabei kann der einhängbare Abschnitt in eine Aussparung im zweiten, oberen Rahmenteil eingeführt werden und in der Sicherungsstellung einen hakenartigen, die Aussparung auf einer Seite begrenzenden Vorsprung hintergreifen.

Das Befestigungselement wird bei dieser Anordnung mit seinem einhängbaren Abschnitt in die Aussparung im oberen Rahmenteil durch eine Schwenkbewegung zum Batterieblock hin eingeführt und durch eine geringfügige Seitwärtsbewegung und eine anschließende Bewegung vom Batterieblock weg am hakenartigen Vorsprung des Rahmenteils eingehängt bzw. eingerastet. Der Haken ist dabei derart ausgeführt, dass das Befestigungselement bzw. sein einhängbarer Abschnitt nur in die Richtung zum Batterieblock hin vom Haken wegbewegbar ist, was nur durch Aufbringen der bereits oben erwähnten manuellen Kraft möglich ist, welche bei korrekt eingesetztem Sicherungsbügel die wirkende Vorspannkraft überwindet.

Um ein Herausrutschen des Sicherungsbügels in vertikaler Richtung zu verhindern, wird vorgeschlagen, dass ein Abstand zwischen der Schraubenanordnung und der Unterseite des zweiten, oberen Rahmenteils derart gewählt ist, dass keine oder nur eine geringfügige Vertikalbewegung des Sicherungsbügels ermöglicht ist. Der somit zwischen Schraubenanordnung und Rahmenbauteil ausgebildete Anschlag verhindert das Herausrutschen der Lasche des Sicherungsbügels aus der Aufnahme im unteren Rahmenteil.

Um die Anpassbarkeit an andere Fahrzeugtypen und verschiedene Größen von Batterieblöcken weiter zu verbessern, wird vorgeschlagen, dass der Sicherungsbügel auf seiner in der Sicherungsstellung dem Batterieblock zugewandten Seite ein mit dem Batterieblock in Kontakt stehendes, insbesondere elastisches Adapterelement umfasst.

In diesem Zusammenhang ist es besonders bevorzugt, dass das Adapterelement oberhalb des unteren Eingriffabschnitts lösbar am Halteabschnitt befestigt ist, wobei das Adapterelement durch eine Schraubenanordnung, welche sich durch ein im Halteabschnitt ausgebildetes Langloch erstreckt, verstellbar befestigt sein kann. Diese Höhenverstellbarkeit des Adapterelements hat ebenfalls Auswirkungen auf die wirkenden Hebelkräfte beim Einhängen des Sicherungsbügels und somit auch auf die auf den Batterieblock wirkenden Spannkräfte.

Sofern ein Adapterelement vorgesehen ist, bildet dieses vorzugsweise den Abstützbereich des Sicherungsbügels am Batterieblock. Das Adapterelement kann also als Auflager gesehen werden, um das der sich oberhalb des Adapterelements befindliche Teil des Sicherungsbügels elastisch verschwenkbar und dann am zweiten Rahmenteil einhängbar ist.

Um die Aufbringung manueller Kräfte beim Einhängen bzw. Aushängen des Sicherungsbügels zu vereinfachen, kann das Befestigungselement einen insbesondere schwenkbaren Betätigungsgriff aufweisen, wobei der Betätigungsgriff im Falle der Schwenkbarkeit zwischen einer Betätigungsstellung und einer Ruhestellung schwenkbar ist. Dabei erstreckt sich der Betätigungsgriff in seiner Betätigungsstellung im Wesentlichen in vertikaler Richtung und ist in seiner Ruhestellung zur Befestigungszunge des Halteabschnitts nach unten geklappt, so dass der vertikale Platzbedarf minimal gehalten ist.

Vorzugsweise weist der Halteabschnitt des Sicherungsbügels eine Y-Form auf, wobei die beiden oberen Schenkel des Halteabschnitts durch einen quer verlaufenden Steg miteinander verbunden sind, an dem das Befestigungselement abgestützt ist.

Gemäß einer besonders vorteilhaften Ausführungsform kann der Sicherungsbügel derart ausgeführt sein, dass eine Abdeckung des Aufnahmefachs für den Batterieblock am Sicherungsbügel befestigbar ist. Der Sicherungsbügel weist in der Sicherungsstellung somit eine vorteilhafte kombinierte Funktion auf, nämlich einerseits als Sicherung des Batterieblocks und andererseits als am Fahrzeugrahmen abgestütztes Bauteil, an dem die Batteriefachabdeckung einfach montierbar ist. Durch diese Art der Konstruktion ist ferner auch gewährleistet, dass die Abdeckung nicht ohne korrekt eingesetzten Sicherungsbügel am Fahrzeug angebracht werden kann, so dass hierdurch ein erhöhtes Maß an Sicherheit erreicht wird, da ein Batteriefach ohne Sicherungsbügel nicht mit der Abdeckung verschlossen werden kann. Bevorzugt wird die Abdeckung im Bereich ihres unteren Randes im ersten, unteren Rahmenteil befestigt und im Bereich ihres oberen Randes am Sicherungsbügel befestigt.

Um die Befestigung der Abdeckung am Sicherungsbügel zu ermöglichen, wird vorgeschlagen, dass die beiden oberen Schenkel des Y-förmigen Halteabschnitts bezogen auf die Sicherungsstellung jeweils zum Batterieblock hin gekröpft sind und Aufnahmemittel zur Befestigung der Abdeckung umfassen. Diese Aufnahmemittel können beispielsweise L-förmige Metallprofile mit einer Öffnung sein, in die ein entsprechendes Gegenstück der Abdeckung eingehängt bzw. eingerastet werden kann.

Um die Sicherung für den Betrieb weiter zu erhöhen und das Inbetriebnehmen eines Fahrzeugs nur bei korrekt gesichertem Batterieblock zu ermöglichen, kann ein Sensor vorgesehen werden, durch den das Vorhandensein bzw. die korrekte Anbringung des wenigstens einen Sicherungsbügels in der Sicherungsstellung überprüfbar ist. Dabei kann der Sensor ein entsprechendes Batteriesicherungssignal an eine elektronische Steuereinheit des Elektrofahrzeugs übermitteln, so dass durch die Steuereinheit mittels einer zugehörigen, insbesondere optischen oder/und akustischen Schnittstelle eine Information über den Batteriesicherungszustand ausgebbar ist.

Sofern bei einem Elektrofahrzeug das Batterieaufnahmefach von beiden Seiten des Fahrzeugs zugänglich ist, wird vorgeschlagen, dass das Fahrzeug zwei Sicherungsbügel umfasst, wobei an jeder Seite des Aufnahmefachs für den Batterieblock ein Sicherungsbügel anbringbar bzw. angebracht ist. Beim Einführen eines Batterieblocks in ein derartiges Aufnahmefach wird dann beispielsweise eine Seite durch einen bereits eingesetzten ersten Sicherungsbügel gesichert, und der Batterieblock wird von der anderen, noch offenen Seite in das Batterieaufnahmefach eingeführt; insbesondere hineingerollt, bis er am ersten Sicherungsbügel anliegt. Anschließend kann der zweite Sicherungsbügel im ersten Rahmenteil eingeführt werden und dann durch Aufbringen manueller Kraft im zweiten Rahmenteil eingehängt werden, so dass der Batterieblock zwischen den beiden Sicherungsbügeln im Batterieaufnahmefach eingespannt und gegen seitliche Bewegung gesichert ist.

Eine Ausführungsform der Erfindung wird nachfolgend beispielhaft und nicht einschränkend unter Bezugnahme auf die anliegenden Figuren beschrieben.
- Fig. 1: ist eine schematische Perspektivansicht eines Flurförderzeugs, das mit einer Ausführungsform des Sicherungsbügels ausgestattet ist.
- Fig. 2: ist eine vergrößerte, perspektivische Teilansicht des Flurförderzeugs, wobei der Blick auf einen Batterieblock und den Sicherungsbügel freigegeben ist.
- Fig. 3a-c: sind verschiedene schematische Ansichten des Sicherungsbügels.
- Fig. 4: ist eine vergrößerte schematische Perspektivansicht des Sicherungsbügels auf die dem Batterieblock zugewandte Seite.
- Fig. 5: ist eine vergrößerte schematische Detaildarstellung der Einhängung des Sicherungsbügels am Fahrzeugrahmen entsprechend dem in Fig. 2 mit V angedeuteten Bereich.
- Fig. 6: ist eine stark vereinfachte und schematische Teilschnittdarstellung, welche das Prinzip des Einhängens des Sicherungsbügels am Fahrzeugrahmen erläutert.
- Fig. 7: ist eine vergrößerte, perspektivische Teildarstellung eines unteren Bereichs des Sicherungsbügels, der in den Fahrzeugrahmen eingesteckt ist gemäß dem in Fig. 2 mit VII bezeichneten Bereich.
- Fig. 8: ist eine perspektivische Teildarstellung mit eingesetzter, aber noch nicht geschlossener Abdeckung für das Batteriefach.
- Fig. 9: ist eine vergrößerte, perspektivische Darstellung entsprechend dem Pfeil IX in der Fig. 8.

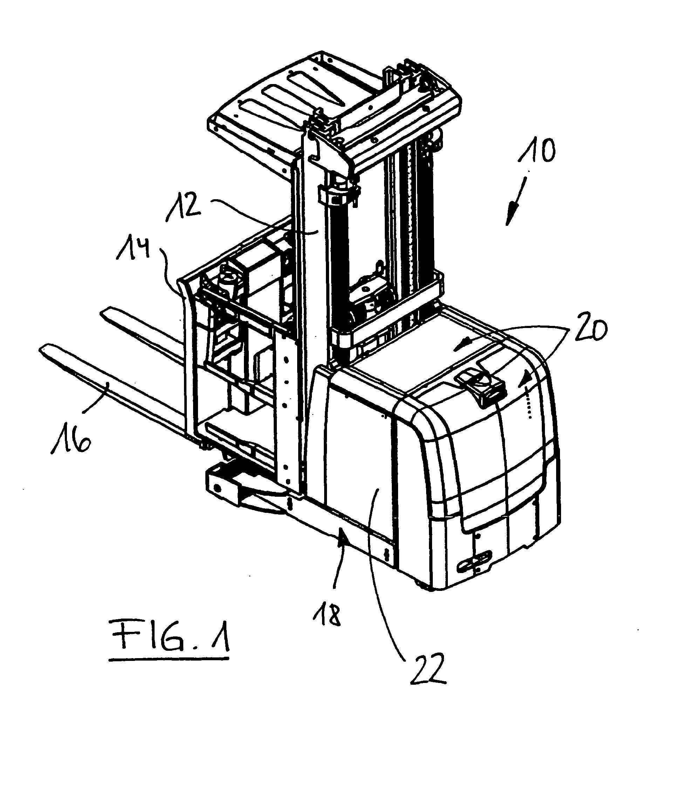

Fig. 1 zeigt in schematischer Perspektivdarstellung ein Flurförderzeug in Form eines Kommissionierers 10, der die bekannten Hauptteile Hubmast 12, vertikal anhebbare Fahrerkabine 14, Lastaufnahmegabel 16, Fahrzeugrahmen 18 und ein Gehäuse 20 umfasst, das einen Batterieblock sowie den elektrischen Antrieb und die Hydraulikpumpen umgibt.

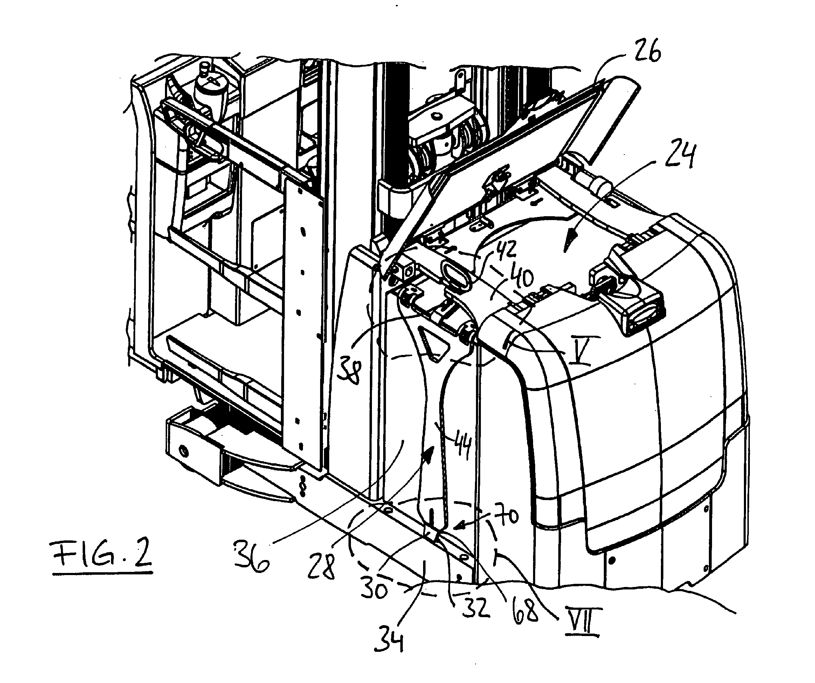

Eine seitliche Abdeckung 22 verschließt ein von der Seite zugängliches Batterieaufnahmefach, in dem der Batterieblock 24 aufgenommen ist (Fig. 2). In der Fig. 2 ist die seitliche Abdeckung 22 entfernt und eine obere Abdeckung 26 ist nach oben verschwenkt, so dass der Blick auf den Batterieblock 24 und einen den Batterieblock 24 gegen seitliches Herausfallen sichernden Sicherungsbügel 28 freigegeben ist. Der Sicherungsbügel ist mit einer Lasche 30 in eine Aufnahme 32 eines unteren Rahmenteils 34 eingesetzt und erstreckt sich im Wesentlichen in vertikaler Richtung entlang einer Seitenwand 36 des Batterieblocks 24 nach oben, wobei er mit einem Befestigungselement 38 an einem oberen Rahmenteil 40 eingehängt ist. Das Befestigungselement 38 weist einen in der Fig. 2 in seine Betätigungsstellung verschwenkten Bügel 42 auf, den eine Bedienperson beim Einsetzen bzw. Herausnehmen des Sicherungsbügels 28 ergreifen kann. Es wird darauf hingewiesen, dass ein derartiger Sicherungsbügel 28 auch auf der anderen Seite des Flurförderzeugs 10 angeordnet sein kann, auch wenn dies in der Fig. 2 nicht dargestellt ist.

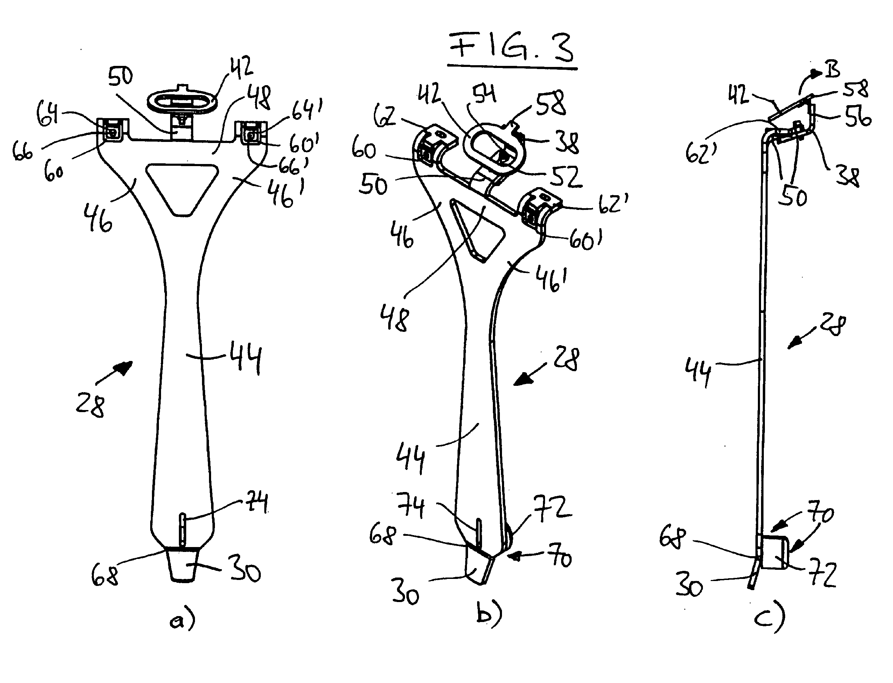

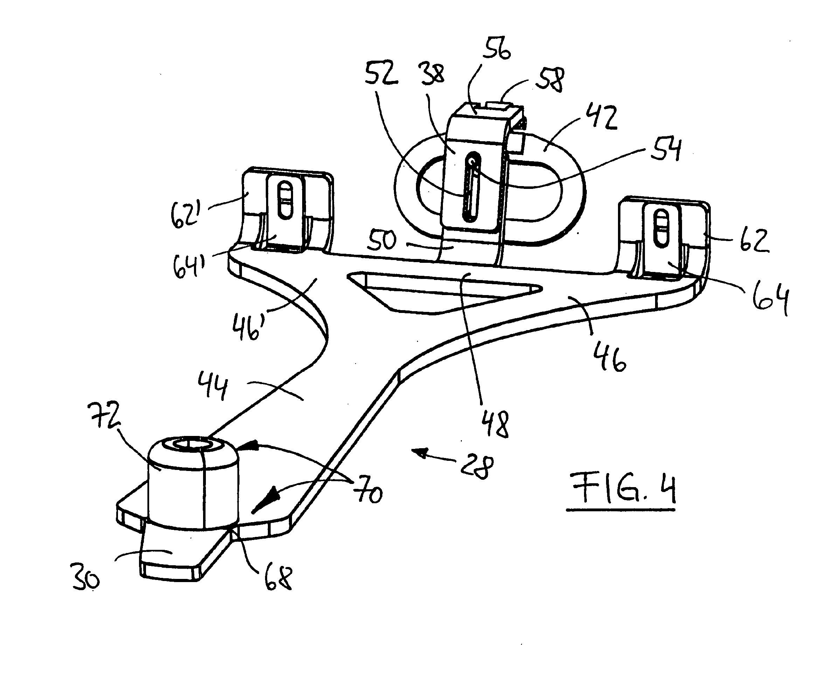

Unter Bezugnahme auf die Fig. 3 und 4 wird nun der Sicherungsbügel im Detail erklärt. Der Sicherungsbügel 28 weist in seinem unteren Bereich die Lasche 30 auf, die in das untere Rahmenteil 34 des Flurförderzeugs eingesteckt werden kann. Nach oben schließt sich an die Lasche 30 ein Halteabschnitt 44 an, der im Wesentlichen die Form eines Y aufweist, wobei die beiden oberen Schenkel 46, 46' über einen horizontal verlaufenden Steg 48 miteinander verbunden sind. In der Mitte des horizontalen Stegs 48 erstreckt sich eine umgebogene und geneigte Befestigungszunge 50, an der das Befestigungselement 38 angebracht ist. In der Befestigungszunge 50 und im Befestigungselement 38 ist jeweils ein Langloch 52 ausgebildet, durch das eine Schraubenanordnung 54 hindurchgeht zum Befestigen des Befestigungselements 38 an der Befestigungszunge 50. Durch die Langlöcher 52 und die Schraubenanordnung 54 ist das Befestigungselement 38 entlang der Befestigungszunge 50 verschiebbar, so dass die Position eines am Rahmenteil 40 eingehängten Abschnitts 56 des Befestigungselements 38 an unterschiedliche Größen von Batterieblöcken bzw. unterschiedliche Rahmen verschiedener Flurförderzeuge angepasst werden kann. Am Befestigungselement 38 ist der Betätigungsbügel 42 schwenkbar angebracht, der in Fig. 3 in seiner Ruhestellung gezeichnet ist. Um den Sicherungsbügel 28 am Flurförderzeug anzubringen oder von diesem zu entfernen, wird der Betätigungsbügel 42 in Richtung des Pfeils B nach oben verschwenkt, bis er mit einem Dorn 58 am Einhängabschnitt 56 des Befestigungselements 38 anliegt und im Wesentlichen in Vertikalrichtung ausgerichtet ist (s. Fig. 2).

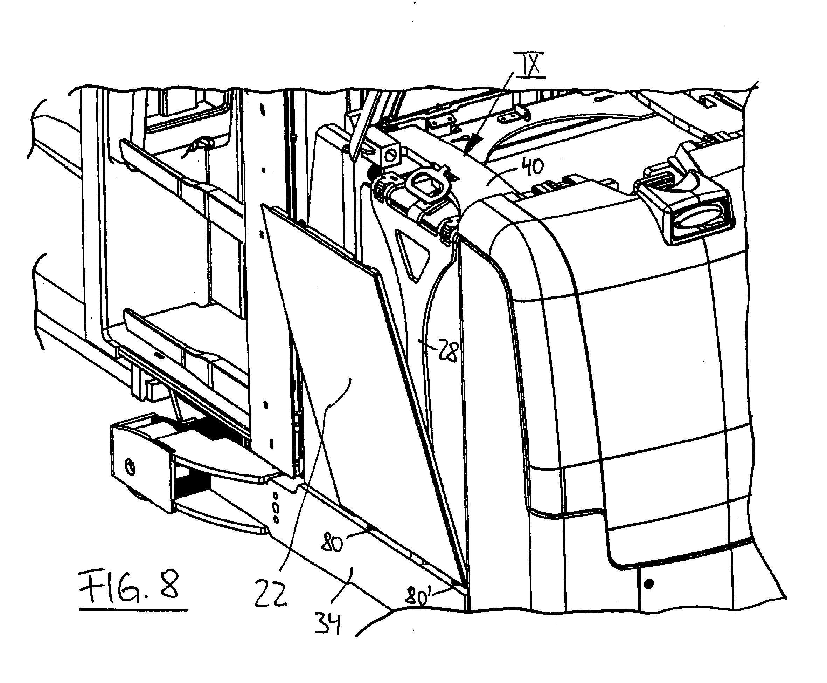

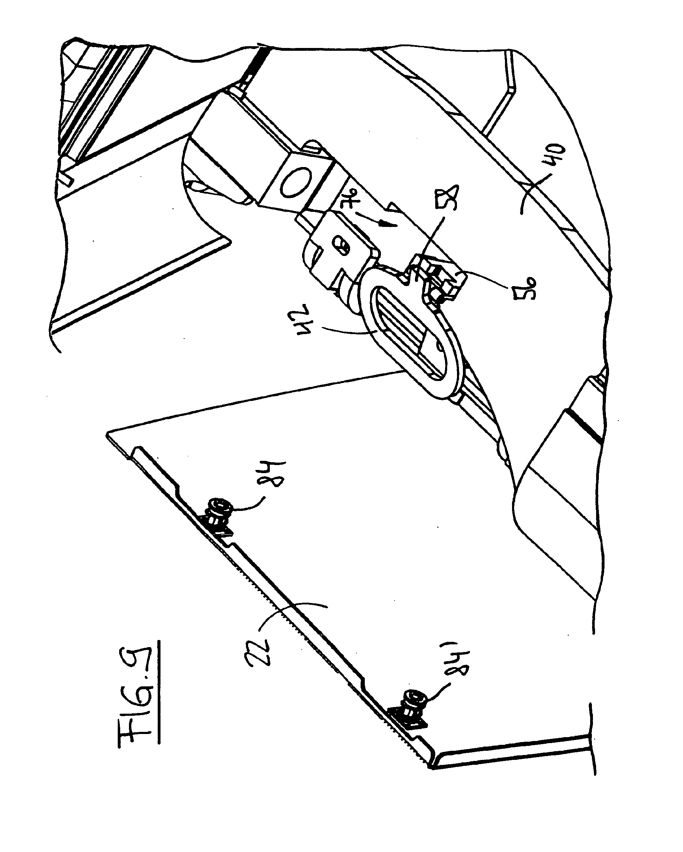

Die beiden Schenkel 46, 46' sind an ihren jeweiligen oberen Enden um etwa 90° gekröpft und weisen eine im Kröpfbereich ausgesparte Öffnung 60, 60' auf. An den gekröpften Abschnitten 62, 62' sind jeweilige L-förmige Profilstücke 64, 64' angebracht, die eine jeweilige Öffnung 66, 66' aufweisen, die zur Befestigung der Abdeckung 22 dienen, was später unter Bezugnahme auf die Fig. 8 und 9 noch genauer beschrieben wird.

Die Lasche 30 und der Halteabschnitt 44 sind zueinander abgewinkelt, so dass zwischen ihnen ein Knick bzw. eine Biegung 68 ausgebildet ist. Wenn der Sicherungsbügel 28 in seiner bestimmungsgemäßen Sicherungsstellung am Flurförderzeug angebracht ist (s. Fig. 2), befindet sich im Bereich der Biegung 68 auf der dem Batterieblock 24 zugewandten Seite ein Abstützbereich 70, mit dem der Sicherungsbügel 28 an der Seitenwand 36 des Batterieblocks 24 in Kontakt steht. Über den Abstützbereich 70 wird beim Einhängen des Befestigungselements 38 im Rahmenteil 40 eine in Querrichtung zur Hauptfahrtrichtung des Flurförderzeugs 10 wirkende Spannkraft auf den Batterieblock 24 ausgeübt, so dass dieser im Batterieaufnahmefach sicher gehalten ist. Damit der Sicherungsbügel 28 für unterschiedliche Batterieblockgrößen angepasst werden kann, kann er im Bereich des Abstützbereichs 70 ein insbesondere elastisches Adapterelement 72 umfassen, das beispielsweise als zylindrischer Kunststoffblock oder dgl. ausgebildet ist. Um den Adapter 72 anbringen zu können, weist der Sicherungsbügel 28 im unteren Abschnitt des Halteabschnitts 44 ein Langloch 74 auf, durch das eine Verschraubung mit dem Adapter 72 erfolgen kann und durch das der Adapter 72 in vertikaler Richtung entlang dem Halteabschnitt 44 entsprechend dem verwendeten Batterieblock und dem Fahrzeugtyp eingestellt werden kann.

Wenn der Sicherungsbügel 28 mit der Lasche 30 im unteren Rahmenteil 34 eingesetzt ist, kommt er mit dem Abstützabschnitt 70 bzw. dem Adapter 72 in Kontakt mit der Seitenwand 36 des Batterieblocks 24, wodurch eine Art Auflager gebildet wird, das einer weiteren Schwenkbewegung des Halteabschnitts 44 und des Befestigungselements 38 zum Batterieblock hin an sich entgegensteht. Allerdings sind die Biegung 68 und/oder der Adapter 72 derart gewählt, dass der oberhalb liegende Teil des Halteabschnitts 44 durch Aufbringen manueller Kraft auf den Betätigungsbügel 42 elastisch in Richtung des Batterieblocks verformt werden kann und mit dem Einhängabschnitt 56 am Rahmenteil 40 eingehängt bzw. eingerastet werden kann.

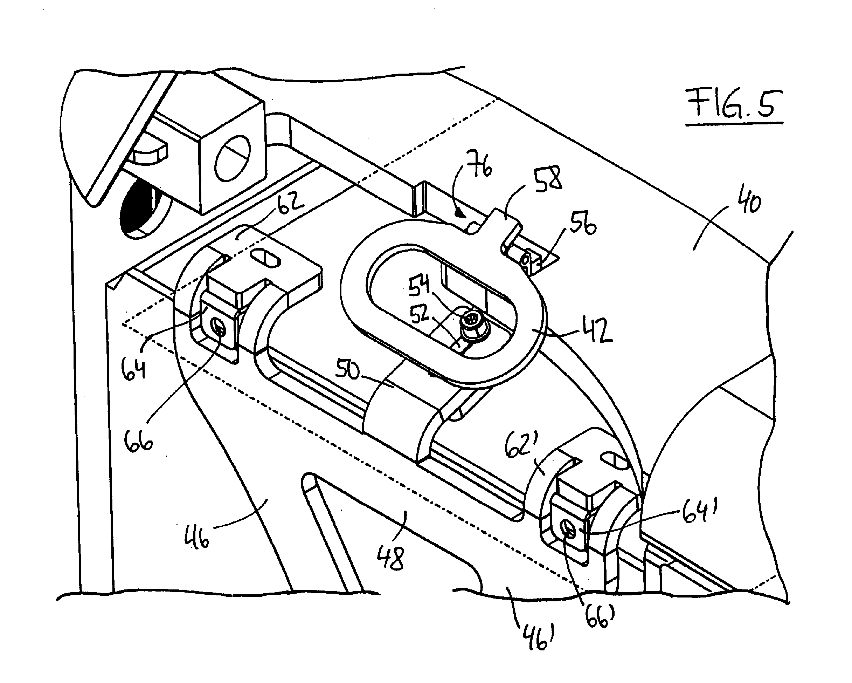

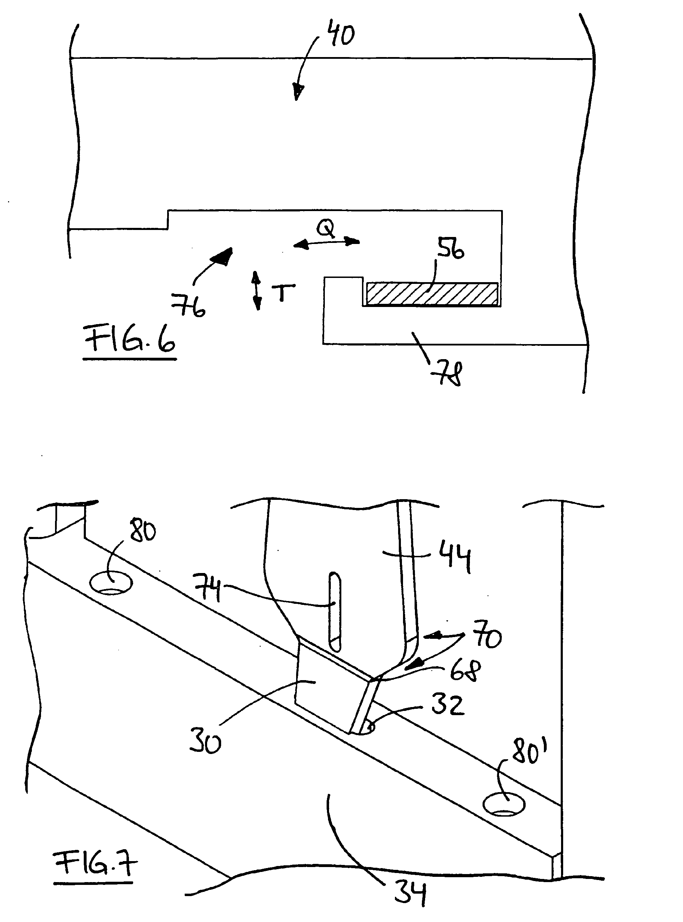

In der Fig. 5 ist der am oberen Rahmenteil 40 eingehängte Einhängabschnitt 56 vergrößert dargestellt. Am Rahmenelement 40 ist, wie dies auch aus der stark schematischen Teilschnittdarstellung der Fig. 6 ersichtlich ist, eine Aussparung 76 vorgesehen, in die das Befestigungselement 38, insbesondere der Einhängabschnitt 56 eingeführt werden kann. Dabei wird beim Einhängen der Einhängabschnitt 56 bezogen auf die Fig. 6 zuerst links von einem hakenartigen Vorsprung 78 in die Aussparung 76 in Richtung zum Batterieblock hin eingeführt, dann in Querrichtung Q in der Ausnehmung 76 bewegt und auf der Innenseite des Hakenelements 78 eingehängt. In dieser Sicherungsstellung, die in Fig. 6 schematisch dargestellt ist, wird der Einhängabschnitt 56 aufgrund der wirkenden Vorspannungskräfte zum Haken 78 gedrückt, so dass er im normalen Fahrbetrieb des Flurförderzeugs nicht aus dieser Sicherungsstellung herausfallen kann. Um den Sicherungsbügel 28 wegzunehmen, muss durch Aufbringen manueller Kraft am Betätigungsbügel 42 entgegen der wirkenden Vorspannung der Einhängabschnitt 56 in Tiefenrichtung T der Ausnehmung 76 vom Haken 78 wegbewegt werden und dann bezogen auf die Fig. 6 nach links in Querrichtung Q der Ausnehmung 76 bewegt werden, damit er dann aus der Ausnehmung 76 in Richtung weg vom Rahmenelement 40 herausgenommen werden kann.

Fig. 7 zeigt stark vergrößert das untere Rahmenteil 34 mit der darin vorgesehenen Aufnahme bzw. Tasche 32, in welche die Lasche 30 des Sicherungsbügels 28 eingeführt ist. Ferner sind in dieser Darstellung auch zwei Öffnungen 80, 80' im Rahmenteil 34 ersichtlich, in welcher die Abdeckung 22 eingesetzt werden kann, wie dies in Fig. 8 dargestellt ist.

Wenn der Sicherungsbügel 28 in seiner Sicherungsstellung am Flurförderzeug 10 eingehängt ist, wird die Abdeckung 22, wie in Fig. 8 gezeigt, in die Öffnungen 80, 80' des unteren Rahmenteils 34 eingesetzt und dann in Richtung zum Sicherungsbügel 28 geschwenkt. Dabei weist die Abdeckung 22 auf ihrer dem Sicherungsbügel 28 zugewandten Seite Befestigungsmittel 84, 84' auf, welche in die Öffnungen 66, 66' der am Sicherungsbügel 28 angebrachten L-Profilstücke 64 eingreifen können. Beispielsweise können die Befestigungsmittel 84, 84' als Verschlüsse ausgeführt sein, die durch leichten Druck von außen auf die Abdeckung 22 entriegelt werden, so dass zusätzliche Griffe oder Hebel auf der Außenseite der Abdeckung entfallen können. Da die Abdeckung 22 am Sicherungsbügel 28 zu befestigen ist, kann ausgeschlossen werden, dass die Abdeckung 22 ohne korrekt eingesetzten Sicherungsbügel 28 angebracht werden kann.

Die vorgestellte Batteriesicherung durch einen Spannbügel 28 benötigt nur wenig Bauraum in Querrichtung zur Hauptfahrtrichtung des Flurförderzeugs 10, und der Sicherungsbügel 28 ist im Zwischenraum zwischen Abdeckung 22 und Batterieseitenwand 26 untergebracht, in dem normalerweise keine weiteren Komponenten des Flurförderzeugs unterzubringen sind, so dass der dort an sich vorhandene Raum optimal zur Sicherung der Batterie genutzt werden kann. Da sich der Sicherungsbügel 28 mit einem Abstützbereich 70 bzw. dem Adapter 72 sehr weit unten am Batterieblock 24 abstützt, ergibt sich ein gut wirksamer Hebelarm, durch den über den Bügel 42, das Befestigungselement 38 und den Halteabschnitt 44 bei relativ geringer manueller Kraft eine hohe Spannkraft auf den Batterieblock ausgeübt werden kann. Diese auf den Batterieblock wirkende Spannkraft führt auch dazu, dass der Einhängabschnitt 56 und die Lasche 30 zur Außenseite des Flurförderzeugs hin gegen die Rahmenteile 34 und 40 gedruckt und abgestützt sind, so dass der Sicherungsbügel beim normalen Fahrbetrieb nicht aus seiner Sicherungsstellung entfernt werden kann aufgrund beispielsweise einer geringen seitlichen Bewegung des Batterieblocks. Da der Sicherungsbügel vollständig entfernbar ist, besteht auch kaum das Risiko einer Beschädigung des Sicherungsbügels, wenn ein Batterieblock zwecks Austausch oder zwecks Wartung aus dem Aufnahmefach entnommen werden muss.

Es wird der Vollständigkeit halber noch darauf hingewiesen, dass die korrekte Anbringung des Sicherungsbügels durch einen in den Figuren nicht dargestellten Sensor überwacht werden kann. Ferner ist ein erfindungsgemäßer Sicherungsbügel nicht nur beim in den Figuren gezeigten Kommissionierer, sondern auch bei allen anderen Arten von Elektrofahrzeugen einsetzbar.

## Patentansprüche

1. Elektrofahrzeug, insbesondere Flurförderzeug mit wenigstens einem Sicherungsbügel (28) für einen im Fahrzeug (10) aufgenommenen Batterieblock (24) **dadurch gekennzeichnet, dass** der Sicherungsbügel (28) einen in ein erstes Rahmenteil (34) des Fahrzeugs (10) einführbaren Eingriffsabschnitt (30), ein in ein zweites Rahmenteil (40) einhängbares Befestigungselement (38, 56) und einen sich dazwischen erstreckenden Halteabschnitt (44) umfasst, wobei der Sicherungsbügel (28) in einer im Fahrzeug (10) eingesetzten Sicherungsstellung mit einem Abstützbereich (70) wenigstens teilweise am Batterieblock (24) anliegt und wobei sich der Abstützbereich (70) des Sicherungsbügels im Bereich des Halteabschnitts (44) oder im Bereich des Übergangs zwischen Halteabschnitt (44) und Eingriffsabschnitt (30) befindet und ein Auflager des Sicherungsbügels (28) am Batterieblock (24) bildet, derart, dass bei in das erste Rahmenteil (34) eingeführtem Eingriffsabschnitt (30) das Befestigungselement (38) unter elastischer Verformung des Halteabschnitts (44) im zweiten Rahmenteil (40) einhängbar ist.

2. Elektrofahrzeug nach Anspruch 1, **dadurch gekennzeichnet, dass** der Sicherungsbügel (28) derart ausgeführt ist, dass er in der Sicherungsstellung eine im Abstützbereich (70) auf den Batterieblock (24) wirkende Spannkraft ausübt.

3. Elektrofahrzeug nach Anspruch 1 oder 2, **dadurch gekennzeichnet, dass** der Sicherungsbügel (28) derart ausgeführt ist, dass er entgegen der in der Sicherungsstellung wirkenden Vorspannkraft außer Eingriff mit wenigstens einem der Rahmenteile, vorzugsweise dem zweiten Rahmenteil (40), bringbar ist.

4. Elektrofahrzeug nach einem der Ansprüche 1 bis 3, **dadurch gekennzeichnet, dass** sich der Sicherungsbügel (28) in der Sicherungstellung in im Wesentlichen vertikaler Richtung vom ersten, unteren Rahmenteil (34) zum zweiten, oberen Rahmenteil (40) des Fahrzeugs (10) erstreckt, wobei das untere und das obere Rahmenteil (34, 40) eine Öffnung eines Aufnahmefachs für den Batterieblock (24) in Vertikalrichtung begrenzen.

5. Elektrofahrzeug nach einem der Ansprüche 1 bis 4, **dadurch gekennzeichnet, dass** der Eingriffsabschnitt als Lasche (30) ausgeführt ist, die einstückig mit dem Halteabschnitt (44) ausgebildet ist, wobei vorzugsweise die Lasche (30) bezogen auf den Halteabschnitt (44) abgewinkelt ist, vorzugsweise in einer Richtung weg vom Batterieblock (24) bezogen auf die Sicherungsstellung.

6. Elektrofahrzeug nach einem der Ansprüche 1 bis 5, **dadurch gekennzeichnet, dass** das Befestigungselement (38) verstellbar am Halteabschnitt (44) befestigt ist, derart, dass der Abstand zwischen einem in das zweite, obere Rahmenteil (40) einhängbaren Abschnitt (56) des Befestigungselements (38) und dem Halteabschnitt (44) veränderbar ist, wobei vorzugsweise das Befestigungselement (38) an einer Befestigungszunge (50) des Halteabschnitts (44) angeordnet ist, wobei die Befestigungszunge (50) vom Halteabschnitt (44) bezogen auf die Sicherungsstellung in Richtung des Batterieblocks (24) vorsteht, und wobei insbesondere die Befestigungszunge (50) oder/und das Befestigungselement (38) ein Langloch (52) aufweisen, durch das eine die Befestigungszunge (50) und das Befestigungselement (38) miteinander verbindende Schraubenanordnung (54), insbesondere Schrauben-Mutter-Anordnung, hindurchgeht und das derart ausgebildet ist, dass das Befestigungselement (38) bei gelöster Schraubenanordnung entlang der Befestigungszunge (50) verstellbar ist.

7. Elektrofahrzeug nach Anspruch 6, **dadurch gekennzeichnet, dass** der einhängbare Abschnitt (56) des Befestigungselements (38) sich in Sicherungsstellung im Wesentlichen in vertikaler Richtung erstreckt, wobei vorzugsweise der einhängbare Abschnitt (56) in eine Aussparung (76) im zweiten, oberen Rahmenteil (40) einführbar ist und in der Sicherungsstellung einen hakenartigen, die Aussparung (76) auf einer Seite begrenzenden Vorsprung (78) hintergreift, und wobei vorzugsweise ein Abstand zwischen der Schraubenanordnung (54) und der Unterseite des zweiten, oberen Rahmenteils (40) derart gewählt ist, dass keine oder nur eine geringfügige Vertikalbewegung des Sicherungsbügels ermöglicht ist.

8. Elektrofahrzeug nach einem der Ansprüche 1 bis 7, **dadurch gekennzeichnet, dass** der Sicherungsbügel (28) auf seiner in der Sicherungsstellung dem Batterieblock zugewandten Seite ein mit dem Batterieblock (24) in Kontakt stehendes, insbesondere elastisches Adapterelement (72) umfasst.

9. Elektrofahrzeug nach Anspruch 8, **dadurch gekennzeichnet, dass** das Adapterelement (72) oberhalb des unteren Eingriffabschnitts (30) lösbar am Halteabschnitt (44) befestigt ist, wobei vorzugsweise das Adapterelement (72) durch eine Schraubenanordnung, welche sich durch ein im Halteabschnitt (44) ausgebildetes Langloch (74) erstreckt, verstellbar befestigt ist.

10. Elektrofahrzeug nach Anspruch 8 oder 9, **dadurch gekennzeichnet, dass** das Adapterelement (72) den Abstützbereich (70) des Sicherungsbügels (28) am Batterieblock bildet.

11. Elektrofahrzeug nach einem der Ansprüche 1 bis 10, **dadurch gekennzeichnet, dass** das Befestigungselement (38) einen insbesondere schwenkbaren Betätigungsgriff (42) aufweist, wobei vorzugsweise der Betätigungsgriff (24) zwischen einer Betätigungsstellung und einer Ruhestellung schwenkbar ist.

12. Elektrofahrzeug nach einem der vorhergehenden Ansprüche, **dadurch gekennzeichnet, dass** der Halteabschnitt (44) eine Y-Form aufweist, wobei die beiden oberen Schenkel (46, 46') des Halteabschnitts (44) durch einen quer verlaufenden Steg (48) miteinander verbunden sind, an dem das Befestigungselement (38) abgestützt ist.

13. Elektrofahrzeug nach Anspruch 1, **dadurch gekennzeichnet, dass** der Sicherungsbügel (28) derart ausgeführt ist, dass eine Abdeckung (22) eines Aufnahmefachs für den Batterieblock (24) am Sicherungsbügel (28) befestigbar ist.

14. Elektrofahrzeug nach Anspruch 13, **dadurch gekennzeichnet, dass** die Abdeckung (22) im Bereich ihres unteren Randes im ersten, unteren Rahmenteil (34) befestigbar ist und im Bereich ihres oberen Randes am Sicherungsbügel (28) befestigbar ist.

15. Elektrofahrzeug nach Anspruch 12 und 14, **dadurch gekennzeichnet, dass** die beiden oberen Schenkel (46, 46') des Halteabschnitts (44) bezogen auf die Sicherungsstellung jeweils zum Batterieblock (24) hin gekröpft sind und Aufnahmemittel (64, 64') zur Befestigung der Abdeckung (22) umfassen.

## Claims

1. An electric vehicle, in particular an industrial truck, comprising at least one securing bracket (28) for a battery pack (24) accommodated in the vehicle (10), **characterised in that** the securing bracket (28) comprises an engagement portion (30), which may be introduced into a first frame part (34) of the vehicle (10), a fastening element (38, 56), which may be suspended in a second frame part (40), and a holding portion (44) extending therebetween, the securing bracket (28), in a securing position in which it has been inserted in the vehicle (10), bearing with a supporting region (70) at least partially against the battery pack (24), and the supporting region (70) of the securing bracket being located in the region of the holding portion (44) or in the region of the transition between the holding portion (44) and the engagement portion (30) and forming a support for the securing bracket (28) on the battery pack (24), in such a way that, when the engagement portion (30) is introduced into the first frame part (34), the fastening element (38) may be suspended in the second frame part (40) with elastic deformation of the holding portion (44).

2. An electric vehicle according to claim 1, **characterised in that** the securing bracket (28) is configured such that, in the securing position, it exerts a tensioning force which acts on the battery pack (24) in the supporting region (70).

3. An electric vehicle according to claim 1 or claim 2, **characterised in that** the securing bracket (28) is configured such that it can be brought out of engagement with at least one of the frame parts, preferably the second frame part (40), counter to the pretensioning force acting in the securing position.

4. An electric vehicle according to any one of claims 1 to 3, **characterised in that**, in the securing position, the securing bracket (28) extends in the substantially vertical direction from the first, lower frame part (34) to the second, upper frame part (40) of the vehicle (10), the lower and upper frame parts (34, 40) defining an opening in a receiving compartment for the battery pack (24) in the vertical direction.

5. An electric vehicle according to any one of claims 1 to 4, **characterised in that** the engagement portion takes the form of a lug (30), which is in one piece with the holding portion (44), the lug (30) preferably being bent relative to the holding portion (44), preferably in a direction away from the battery pack (24) with respect to the securing position..

6. An electric vehicle according to any one of claims 1 to 5, **characterised in that** the fastening element (38) is fastened adjustably on the holding portion (44) in such a way that the distance between a portion (56) of the fastening element (38) suspendable in the second, upper frame part (40) and the holding portion (44) is variable, the fastening element (38) preferably being arranged on a fastening tongue (50) of the holding portion (44), the fastening tongue (50) protruding from the holding portion (44) with respect to the securing position in the direction of the battery pack (24), the fastening tongue (50) and/or the fastening element (38) in particular having a slot (52), through which passes a screw arrangement (54), in particular a screw-and-nut arrangement, connecting together the fastening tongue (50) and the fastening element (38), and which is configured such that the fastening element (38) is adjustable along the fastening tongue (50) when the screw arrangement has been undone.

7. An electric vehicle according to claim 6, **characterised in that** the suspendable portion (56) of the fastening element (38) extends substantially in the vertical direction in the securing position, the suspendable portion (56) preferably being introducible into a recess (76) in the second, upper frame part (40) and, in the securing position, engaging behind a hook-like projection (78), which defines the recess (76) on one side, and a distance between the screw arrangement (54) and the underside of the second, upper frame part (40) preferably being selected in such a way that no, or only slight, vertical movement of the securing bracket is allowed.

8. An electric vehicle according to any one of claims 1 to 7, **characterised in that** the securing bracket (28) comprises, on its side facing the battery pack in the securing position, an in particular resilient adapter element (72) which is in contact with the battery pack (24).

9. An electric vehicle according to claim 8, **characterised in that** the adapter element (72) is fastened releasably to the holding portion (44) above the lower engagement portion (30), the adapter element (72) preferably being fastened adjustably by a screw arrangement, which extends through a slot (74) formed in the holding portion (44).

10. An electric vehicle according to claim 8 or claim 9, **characterised in that** the adapter element (72) forms the supporting region (70) of the securing bracket (28) on the battery pack.

11. An electric vehicle according to any one of claims 1 to 10, **characterised in that** the fastening element (38) has an in particular pivotable actuating handle (42), the actuating handle (24) preferably being pivotable between an actuating position and a rest position.

12. An electric vehicle according to any one of the preceding claims, **characterised in that** the holding portion (44) has a Y shape, with the two upper limbs (46, 46') of the holding portion (44) being connected together by a transversely extending web (48), on which the fastening element (38) is supported.

13. An electric vehicle according to claim 1, **characterised in that** the securing bracket (28) is configured such that a cover (22) of a receiving compartment for the battery pack (24) may be fastened to the securing bracket (28).

14. An electric vehicle according to claim 13, **characterised in that** the cover (22) may be fastened, in the region of its lower edge, in the first, lower frame part (34) and may be fastened, in the region of its upper edge, to the securing bracket (28).

15. An electric vehicle according to claims 12 and 14, **characterised in that** the two upper limbs (46, 46') of the holding portion (44) are each offset towards the battery pack (24) with respect to the securing position and comprise receiving means (64, 64') for attachment of the cover (22).

## Revendications

1. Véhicule électrique, en particulier chariot de manutention doté d'un étrier de maintien (28) pour un bloc de batterie (24) installé dans le véhicule (10), **caractérisé en ce que** l'étrier de maintien (28) comprend une partie d'accrochage (30) à introduire dans une première partie de châssis (34) du véhicule (10), un élément de fixation (38, 56) à suspendre dans une deuxième partie de châssis (40) et une partie de maintien (44) s'étendant entre celles-ci, dans lequel l'étrier de maintien (28) s'applique, dans une position de maintien utilisée dans le véhicule (10), au moins partiellement avec une zone de soutien (70) sur le bloc de batterie (24), et dans lequel la zone de soutien (70) de l'étrier de maintien (28) se trouve dans la région de la partie de maintien (44) ou dans la région de la transition entre la partie de maintien (44) et la partie d'engagement (30) et forme un appui de l'étrier de maintien (28) sur le bloc de batterie (24), de telle manière que, lorsque la partie d'engagement (30) est introduite dans la première partie de châssis (34), l'élément de fixation (38) puisse être suspendu dans la deuxième partie de châssis (40) avec une déformation élastique de la partie de maintien (44).

2. Véhicule électrique selon la revendication 1, **caractérisé en ce que** l'étrier de maintien (28) est réalisé de telle manière que, dans la position de maintien, il exerce une force de serrage agissant sur le bloc de batterie (24) dans la zone de soutien (70).

3. Véhicule électrique selon la revendication 1 ou 2, **caractérisé en ce que** l'étrier de maintien (28) est réalisé de telle manière qu'il puisse être amené hors d'engagement avec au moins une des parties de châssis, de préférence la deuxième partie de châssis (40), contre la force de serrage agissant dans la position de maintien.

4. Véhicule électrique selon l'une quelconque des revendications 1 à 3, **caractérisé en ce que** l'étrier de maintien (28) s'étend, dans la position de maintien, en direction essentiellement verticale, depuis la première partie inférieure de châssis (34) jusqu'à la deuxième partie supérieure de châssis (40) du véhicule (10), dans lequel les parties de châssis inférieure et supérieure (34, 40) limitent en direction verticale une ouverture d'un compartiment de réception pour le bloc de batterie (24).

5. Véhicule électrique selon l'une quelconque des revendications 1 à 4, **caractérisé en ce que** la partie d'engagement est réalisée en forme de patte (30), qui est formée d'une seule pièce avec la partie de maintien (44), dans lequel la patte (30) est de préférence coudée par rapport à la partie de maintien (44), de préférence dans une direction s'éloignant du bloc de batterie (24) par rapport à la position de maintien.

6. Véhicule électrique selon l'une quelconque des revendications 1 à 5, **caractérisé en ce que** l'élément de fixation (38) est fixé de façon réglable sur la partie de maintien (44), de telle manière que la distance entre une partie (56) de l'élément de fixation (38) à suspendre dans la deuxième partie supérieure de châssis (40) et la partie de maintien (44) soit variable, dans lequel l'élément de fixation (38) est de préférence disposé sur une languette de fixation (50) de la partie de maintien (44), dans lequel la languette de fixation (50) est saillante sur la partie de maintien (44), par rapport à la position de maintien, en direction du bloc de batterie (24), et dans lequel la languette de fixation (50) et/ou l'élément de fixation (38) présentent en particulier un trou oblong (52), à travers lequel passe un arrangement de vis (54) reliant l'un à l'autre la languette de fixation (50) et l'élément de fixation (38), et qui est réalisé de telle manière que l'élément de fixation (38) soit réglable le long de la languette de fixation (50) lorsque l'arrangement de vis est desserré.

7. Véhicule électrique selon la revendication 6, **caractérisé en ce que** la partie à suspendre (56) de l'élément de fixation (38) s'étend en position de maintien essentiellement en direction verticale, dans lequel la partie à suspendre (56) peut de préférence être introduite dans une découpe (76) dans la deuxième partie supérieure de châssis (40) et, dans la position de maintien, s'accroche derrière une saillie en forme de crochet (78) limitant la découpe (76) sur un côté, et dans lequel une distance entre l'arrangement de vis (54) et le côté inférieur de la deuxième partie supérieure de châssis (40) est de préférence choisie de telle manière qu'aucun mouvement vertical ou seulement un mouvement vertical très faible de l'étrier de maintien soit possible.

8. Véhicule électrique selon l'une quelconque des revendications 1 à 7, **caractérisé en ce que** l'étrier de maintien (28) comprend, sur son côté tourné vers le bloc de batterie dans la position de maintien, un élément adaptateur (72), en particulier élastique, se trouvant en contact avec le bloc de batterie (24).

9. Véhicule électrique selon la revendication 8, **caractérisé en ce que** l'élément adaptateur (72) est fixé de façon détachable à la partie de maintien (44) au-dessus de la partie d'engagement inférieure (30), dans lequel l'élément adaptateur (72) est fixé de façon réglable de préférence par un arrangement de vis, qui s'étend à travers un trou oblong (74) formé dans la partie de maintien (44).

10. Véhicule électrique selon la revendication 8 ou 9, **caractérisé en ce que** l'élément adaptateur (72) forme la zone de soutien (70) de l'étrier de maintien (28) sur le bloc de batterie.

11. Véhicule électrique selon l'une quelconque des revendications 1 à 10, **caractérisé en ce que** l'élément de fixation (38) présente une poignée d'actionnement (42) en particulier pivotante, dans lequel la poignée d'actionnement (42) peut de préférence pivoter entre une position d'actionnement et une position de repos.

12. Véhicule électrique selon l'une quelconque des revendications précédentes, **caractérisé en ce que** la partie de maintien (44) présente une forme en Y, dans lequel les deux branches supérieures (46, 46') de la partie de maintien (44) sont reliées l'une à l'autre par une nervure (48) s'étendant transversalement, sur laquelle l'élément de fixation (38) est appuyé.

13. Véhicule électrique selon la revendication 1, **caractérisé en ce que** l'étrier de maintien (28) est réalisé de telle manière qu'un couvercle (22) d'un compartiment de réception pour le bloc de batterie (24) puisse être fixé à l'étrier de maintien (28).

14. Véhicule électrique selon la revendication 13, **caractérisé en ce que** le couvercle (22) peut être fixé dans la région de son bord inférieur dans la première partie inférieure de châssis (34) et peut être fixé dans la région de son bord supérieur à l'étrier de maintien (28).

15. Véhicule électrique selon la revendication 12 et 14, **caractérisé en ce que** les deux branches supérieures (46, 46') de la partie de maintien (44) sont chaque fois coudées vers le bloc de batterie (24) par rapport à la position de maintien, et comprennent des moyens de réception (64, 64') pour la fixation du couvercle (22).
